# EUROPÄISCHE PATENTSCHRIFT

(11) **EP 3 332 639 B1**
(45) Veröffentlichungstag und Bekanntmachung des Hinweises auf die Patenterteilung: **21.04.2021**
(21) Anmeldenummer: 17205703.6
(22) Anmeldetag: 06.12.2017
(51) Int. Cl.: A01M 7/00

(54) **LANDWIRTSCHAFTLICHE FELDSPRITZE**
AGRICULTURAL FIELD SPRAYING DEVICE
PULVÉRISATEUR AGRICOLE

(30) Priorität: 08.12.2016 DE 102016123757
(43) Veröffentlichungstag der Anmeldung: 13.06.2018
(73) Patentinhaber: HORSCH LEEB Application Systems GmbH, 94405 Landau an der Isar (DE)
(72) Erfinder: LEEB, Theodor, 94562 Oberpöring (DE)
(74) Vertreter: Benninger, Johannes

(56) Entgegenhaltungen:
- EP-A1- 3 167 712
- EP-A2- 1 906 013
- WO-A1-2012/152758
- DE-A1-102004 047 585

## Beschreibung

Die vorliegende Erfindung betrifft eine landwirtschaftliche Feldspritze zum Ausbringen von Flüssigkeiten, insbesondere von flüssigen Trägerflüssigkeiten und/oder in Trägerflüssigkeiten gelösten Wirkstoffkonzentraten wie Düngemittel, Pflanzenschutzmittel oder dergl., gemäß den Merkmalen des unabhängigen Anspruchs 1. Die Erfindung betrifft zudem ein Verfahren zur Verteilung von Flüssigkeiten gemäß den Merkmalen des unabhängigen Verfahrensanspruchs 10.

Landwirtschaftliche Feldspritzen bzw. sogenannte landwirtschaftliche Pflanzenschutzmaschinen werden zum Ausbringen bzw. zur Applikation von Flüssigkeiten, insbesondere von flüssigen Trägerflüssigkeiten und/oder von in Trägerflüssigkeiten gelösten Wirkstoffkonzentraten wie Düngemittel, Pflanzenschutzmittel oder dergl. verwendet. Derartige Feldspritzen mit einem quer zur Fahrtrichtung orientierten und über einem Pflanzenbestand bewegten Verteilergestänge bzw. mit einem Spritzgestänge sind in unterschiedlichsten Ausführungsvarianten bekannt, so bspw. als selbstfahrende oder mittels eines Zugfahrzeugs gezogene oder an dieses angehängte Feldspritzen.

Eine derartige Feldspritze wurde bspw. durch die EP 0 463 007 B1 bekannt. Um die Verteilqualität zu erhöhen, sowie ein gewünschtes Mischverhältnis zwischen einer Trägerflüssigkeit und einem Wirkstoffkonzentrat einzuhalten, ist vorgesehen, dass die Trägerflüssigkeit zur Vermischung mit dem Wirkstoffkonzentrat, in der gewünschten Konzentration mit einer Pumpe aus einem Vorratsbehälter in eine Mischkammer geleitet wird. In diese Mischkammer wird die Trägerflüssigkeit mit einem aus einem Wirkstoffmittelbehälter über eine Dosiervorrichtung eingespritztem Wirkstoffkonzentrat vermischt und unmittelbar den Spritz- und Ausbringdüsen eines Spritz- bzw. Verteilergestänges zugeführt. Nachteilig an einer derartigen Ausgestaltung ist jedoch, dass jeweils nur ein Wirkstoffmittel ausgebracht werden kann, wodurch eine gewünschte teilflächenspezifische Behandlung des Pflanzenbestandes nicht möglich ist und Fehlbehandlungen entstehen können. Des Weiteren besitzt dieses System eine begrenzte Anzahl an Zuführleitungen, bspw. nur jeweils eine für jeden Flüssigkeitskreislauf. Dadurch wird das System jedoch träge, da somit jeweils die Ausbringdüsen, welche näher an der Zuführleitung angeordnet sind, schneller mit dem Wirkstoffmittel versorgt werden als weiter beabstandete, wodurch jeweils ein Zeitversatz entsteht, bis alle Ausbringdüsen mit dem gewünschten Wirkstoffmittel versorgt werden. Gegenteilig verhält es sich, wenn die Wirkstoffmittelzufuhr in einem Flüssigkeitskreislauf abgeschaltet wird. Dadurch ist auch mit einem derartigen System eine teilflächenspezifische Behandlung durch die großen Reaktionszeiten, insbesondere bei hohen Fahrgeschwindigkeiten, nur bedingt möglich, wodurch es wiederum zu Fehlbehandlungen kommen kann.

Ein weiteres System geht aus der WO 2014/200896 A1 hervor. Die Feldspritze umfasst separate Vorratsbehälter für diverse Flüssigkeiten und/oder Wirkstoffmittel. Die Vorratsbehälter stehen über eine Leitung mit einer Mischkammer in Verbindung, innerhalb welcher die Flüssigkeiten und/oder Wirkstoffmittel zu einer Ausbringflüssigkeit und/oder zu einem Ausbringmittel miteinander vermischt werden. Um die Ausbringflüssigkeit und/oder das Ausbringmittel über die am Verteilergestänge vorgesehenen Ausbringdüsen ausbringen zu können, ist eine Ringleitung vorgesehen, welche die Mischkammer mit den Ausbringdüsen fluidisch verbindet. Der Einsatz von lediglich einer Ringleitung hat sich jedoch als nachteilig erweisen, da es beispielsweise beim An- und/oder Abschalten der Maschine, insbesondere beim Ansteuern des Gestänges bzw. der Ausbringdüsen, zu zeitlich starken Verzögerungen und dadurch zu einer zumindest zeitweisen ungleichmäßigen Verteilung der Ausbringflüssigkeit und/oder des Ausbringmittels
kommt.

Aus der DE 10 2004 047585 A1 ist eine Spritzeinrichtung zum Versprühen von Flüssigkeiten, insbesondere für landwirtschaftliche Zwecke, bekannt. Wirkstoff wird über eine Wirkstoffvorlaufleitung auf ein Gestänge und zu entsprechenden Düsenhaltern geführt. Die Düsenhalter weisen jeweils eine Sprühdüse, eine Dosierpumpe und eine Mischkammer auf. Die Düsenhalter weisen zudem Anschlüsse für eine Trägerflüssigkeitsleitung sowie für die Wirkstoffzirkulationsleitung auf.

Ein weiteres System ist durch die EP 3 167 712 EP offenbart. EP 3 167 712 A1 ist Stand der Technik gemäß Artikel 54 (3) EPÜ. Die Spritzeinrichtung umfasst einen Tank und ggf. einen Zusatztank, wobei der Tank eine Trägerflüssigkeit und der Zusatztank eine Zusatzflüssigkeit enthalten. Der Vorratstank und der Zusatztank sind über eine erste Flüssigkeitsleitung mit einer Vielzahl von Spritzdüsen verbunden. Zusätzlich kann ein mit Wirkstoffen befüllter Wirkstofftank vorgesehen sein, welcher über eine zweite Flüssigkeitsleitung mit den Spritzdüsen verbunden ist. Sowohl zwischen der ersten Flüssigkeitsleitung und den Spritzdüsen als auch zwischen der zweiten Flüssigkeitsleitung und den Spritzdüsen sind jeweils Ventile angeordnet, um damit jeweils eine definierte Menge an Trägerflüssigkeit und Wirkstoffen in die Spritzdüsen einspritzen zu können. Die eingespritzte Trägerflüssigkeit und eingespritzten Wirkstoffe werden zunächst in den Spritzdüsen zugeordneten Mischkammern vermischt, und nach Vermischung anschließend mittels den Spritzdüsen ausgebracht.

Um die genannten Nachteile zu vermeiden und verbesserte Systeme zu schaffen, sind aus dem Stand der Technik sog. "Direkteinspeisesysteme" bekannt. Ein derartiges System wurde durch das deutsche Unternehmen "Herbert Dammann GmbH" mit der Bezeichnung "Multi-Fluid-System" bereits bekannt (vgl. Beschreibung auf der Internetpräsenz http://www.dammann-technik.de/dammann-multi-fluid-system/ vom 05.10.2015). Die Feldspritze weist hierbei wenigstens zwei voneinander unabhängige Flüssigkeitskreisläufe für zwei verschiedene Wirkstoffmittel auf. In Abhängigkeit der gewünschten teilflächenspezifischen Behandlung können die Flüssigkeitskreisläufe bzw. die diesen zugeordneten Ausbringdüsen entsprechend zu- bzw. weggeschaltet werden. Das hierdurch bekannte System weist jedoch einige Nachteile auf. So ist dieses sehr aufwendig, da jeweils in Abhängigkeit der Anzahl an verschiedenen Wirkstoffmittel, voneinander getrennte Flüssigkeitskreisläufe an der Feldspritze aufgebaut werden müssen, welche wiederum kostenintensiv sind, viel Bauraum benötigen und welche nur bedingt gereinigt werden können. Ebenso ist es möglich, dass sich die Spritzkegel der wenigstens zwei nebeneinander angeordneten Ausbringdüsen gegenseitig beeinflussen, wodurch die Verteilqualität wiederum verschlechtert wird.

Eine weitere Feldspritze mit einer anderen Ausführungsvariante eines Direkteinspeisesystems geht aus der WO 2012 152 758 A1 hervor. Die Feldspritze weist einen Vorratstank zur Aufnahme von Klarwasser, welches als Trägerflüssigkeit dient, auf. Von dem Vorratstank führen zwei Leitungen zu motorisch angetriebenen Pumpen, welche zwei Leitungen jedoch beispielsweise nicht über Regelventile oder dergleichen miteinander verbunden sind. In zumindest einer der Leitungen, die wiederum zu Ausbringleitungen mit zugeordneten Ausbringdüsen führen, ist eine Mischkammer angeordnet. In diese Mischkammer werden über Dosierpumpen jeweils verschiedene Wirkstoffkonzentrate in einstellbarer Weise eingespeist. In der Mischkammer werden diese Wirkstoffkonzentrate mit der Trägerflüssigkeit zu einem Wirkstoffmittel vermischt. Vorzugsweise ist jeder Ausbringdüse eine Ausbringleitung mit Mischkammer zugeordnet. Auch dieses System bringt einige Probleme mit sich. So kann es durch die zwei nebeneinander angeordneten Ausbringdüsen wiederum zu gegenseitigen Beeinträchtigungen dieser kommen. Ebenso kann durch die Mehrzahl an Ausbringdüsen eine exakte Konzentration an Wirkstoffmittel an der jeweiligen Stelle des Verteilergestänges nicht garantiert werden, da die jeweilige Menge an Wirkstoffmittel jeweils durch die Ausbringdüsen definiert wird, welche eine geregelte Ausbringmenge nur bedingt zulassen und diese durch die Anordnung in Reihe zueinander ebenfalls nur bedingt regelbar sind.

Eine weitere Lösung geht aus der US 2013/0233940 A1 hervor, bei welcher mehrere mit unterschiedlichen Flüssigkeiten und/oder Wirkstoffmittel befüllte Vorratsbehälter vorgesehen sind. Die Vorratsbehälter stehen jeweils über einzelne Leitungen mit einem Injektor in Verbindung. Über die Injektoren wird bestimmt und/oder vorgegeben, welche Flüssigkeit und/oder Wirkstoffmittel zunächst in einer Mischkammer gemischt und anschließend über die Ausbringdüsen des jeweiligen Verteilergestänges ausgebracht und/oder verteilt werden soll. Bei dieser bekannten Lösung hat sich die hohe Anzahl an Leitungen und Ausbringdüsen sowie die dadurch verbundenen hohen Kosten als nachteilig erwiesen. Auch kann es beim An- und Abschalten des Verteilergestänges zu zeitlich starken Verzögerungen und dadurch zu einer zumindest zeitweisen ungleichmäßigen Verteilung der Ausbringflüssigkeit und/oder des Ausbringmittels kommen.

Der Erfindung liegt somit die Aufgabe zugrunde, eine landwirtschaftliche Feldspritze zu schaffen, mittels welcher eine teilflächenspezifische Behandlung mit wenigstens zwei verschiedenen Trägerflüssigkeiten und/oder mit Wirkstoffmittel ermöglicht wird, ohne hierfür eine erhöhte Anzahl von Ausbringdüsen zu benötigen, eine schnelle Reaktionszeit zu erreichen sowie eine gewünschte Konzentration der Wirkstoffmittel zueinander ohne lange Vor- und Rücklaufzeiten zu ermöglichen. Zudem ist es Ziel der Erfindung, ein Verfahren zur Verteilung von Flüssigkeiten zur Verfügung zu stellen.

Diese Ziele der Erfindung werden durch eine landwirtschaftliche Feldspritze mit den Merkmalen des unabhängigen Anspruchs 1 sowie durch eine Verfahren mit den Merkmalen des unabhängigen Verfahrensanspruchs 10 erreicht, wobei weitere vorteilhafte Ausgestaltungen und Weiterbildungen der Erfindung aus den jeweiligen abhängigen Ansprüchen hervorgehen.

Zur Erreichung der genannten Ziele schlägt die Erfindung eine landwirtschaftliche Feldspritze zum Ausbringen von Flüssigkeiten, insbesondere von flüssigen Trägerflüssigkeiten und/oder von in Trägerflüssigkeiten gelösten Wirkstoffkonzentraten wie Düngemittel, Pflanzenschutzmittel oder dergl. vor. Bei der Trägerflüssigkeit kann es sich insbesondere um Klarwasser handeln. Auch denkbar wäre es, dass die Trägerflüssigkeit sich aus Klarwasser und zumindest einem in diesem gelösten Wirkstoffkonzentrat zusammensetzt. Das Wirkstoffkonzentrat kann jeweils in flüssiger oder granularer Form vorliegen und bspw. ein Düngemittel oder Pflanzenschutzmittel sein. Durch das Vermischen bzw. Lösen des Wirkstoffkonzentrats in einer Trägerflüssigkeit entsteht somit ein Wirkstoffmittel. Es kann sich somit sowohl beim Wirkstoffmittel als auch bei der Trägerflüssigkeit um eine Dispersion handeln, wobei diese jeweils unterschiedliche Zusammensetzungen und Konzentrationen aufweisen können. Die Feldspritze kann als selbstfahrende oder als von einem Zugfahrzeug gezogene und als eine an einem Zugfahrzeug angebaute Feldspritze ausgeführt sein.

Um zumindest zwei verschiedene Trägerflüssigkeiten und/oder Wirkstoffmittel über ein Verteilergestänge ausbringen zu können, umfasst die Feldspritze wenigstens eine Ausgangsleitung und wenigstens eine Ringleitung, wobei der Flüssigkeitstransport in den beiden Leitungen mittels wenigstens einer von einer Kraftquelle bzw. motorisch bspw. einer elektrisch und/oder hydraulisch angetriebenen Pumpe erfolgt. Es wäre auch denkbar, dass der Ausgangsleitung und der Ringleitung eine gemeinsame Pumpe zugeordnet ist. Jedoch wird vorzugsweise jeder der Leitungen eine separate Pumpe zugeordnet, um somit u. a. mittels der Pumpe jeweils die Menge an geförderter Flüssigkeit sowie die vorhandenen Drücke variieren zu können.

Die Ausgangsleitung und die Ringleitung werden jeweils entlang eines Verteilergestänges geführt. Entlang dieses Verteilergestänges sind eine Mehrzahl von Ausbringdüsen zur Verteilung der jeweiligen Trägerflüssigkeit bzw. der Wirkstoffmittel angebracht. Zumindest die Ausgangsleitung kann direkt mit den Ausbringdüsen verbunden sein. Wahlweise können auch zwischen Ausgangsleitung und Ausbringdüsen Regelventile oder sonstige Elemente dazwischen angeordnet sein.

Die Ausgangsleitung kann vorzugsweise mit einem ersten Vorratsbehälter verbunden sein, in welchem Vorratsbehälter eine Trägerflüssigkeit und/oder ein Wirkstoffmittel mitgeführt und bereitgestellt wird. Die Ringleitung ist mit zumindest einer Mischkammer verbunden bzw. die Ringleitung bildet mit dieser zumindest einen Mischkammer einen Kreislauf, wobei mittels der zumindest einen Mischkammer zumindest ein weiteres Wirkstoffmittel bereitgestellt bzw. bevorratet wird. Mit der zumindest einen Mischkammer ist zumindest eine als einstellbare Dosiereinrichtung ausgebildete Zufuhreinrichtung, die dazu ausgelegt ist, dass der zumindest einen Mischkammer verschiedene Trägerflüssigkeiten und/oder Wirkstoffkonzentrate in einstellbarer Weiser zugeführt werden können, verbunden. In der zumindest einen Mischkammer entsteht somit ein weiteres Wirkstoffmittel, wobei deren Zusammensetzung bzw. deren Konzentration in Abhängigkeit von der Anzahl an Zufuhreinrichtungen bzw. der Anzahl an verschiedenen Wirkstoffkonzentraten sowie deren Menge und der Menge an zugeführter Trägerflüssigkeit variabel ist und jeweils in Abhängigkeit der gewünschten Verteilung angepasst werden kann. Wahlweise können auch mehrere Mischkammern, wie beispielsweise zwei, drei oder vier Mischkammern oder je nach Bedarf mehrere Mischkammern, vorgesehen sein, welche Mischkammern jeweils zusammen mit der Ringleitung einen Kreislauf bilden.

Eine schnelle Reaktionszeit bei einer nicht erhöhten bzw. geringen Anzahl an Ausbringdüsen lässt sich dadurch erreichen, dass die Ausgangsleitung und die Ringleitung im Bereich des Verteilergestänges an zumindest einer Position verbunden sind. Dieser Verbindung kann ein Regelventil zur dosierten Zuführung der in der Ringleitung beförderten Trägerflüssigkeit und/oder der Wirkstoffmittel zur Ausgangsleitung und/oder zu den Ausbringdüsen zugeordnet sein. Die Reaktionszeit lässt sich noch weiter verringern, wenn die Anzahl an Verbindungen bzw. an Regelventilen entlang der Verteilvorrichtung erhöht wird. Über die Anzahl an Regelventilen kann insbesondere auch die Breite des Verteilergestänges variiert werden. Umgekehrt kann auch die Anzahl von Regelventilen von der Breite des Verteilergestänges abhängen. So ist es denkbar, dass die Verteilvorrichtung eine Mehrzahl von Segmenten oder Teilbreiten aufweist, und dass bspw. jeder Teilbreite der Verteilvorrichtung eine Verbindung mit Regelventil zugeordnet ist, oder dass jeder Ausbringdüse eine Verbindung bzw. ein entsprechendes Regelventil zugeordnet ist. Ebenso wäre es denkbar, dass die Verbindung bzw. das Regelventil in die Ausbringdüse integriert ist. Somit kann anhand der Anzahl an Verbindungen bzw. an Regelventilen jeweils die Zeitdifferenz definiert werden, bis alle Ausbringdüsen mit dem entsprechenden Wirkstoffmittel versorgt sind, und wie lange diese bei einem Ausschalten noch nachlaufen. Ebenso ist die Reaktionszeit desto kürzer, desto näher die Verbindung bzw. das Regelventil zu den Ausbringdüsen angeordnet ist. Aus diesem Grund erfolgt die Verbindung vorzugsweise ausschließlich im Bereich des Verteilergestänges bzw. unmittelbar an den Ausbringdüsen oder ist in die Ausbringdüsen integriert.

Das Verteilergestänge kann beispielsweise in zwei, vier oder sechs Teilbreiten oder in beliebig viele Teilbreiten unterteilt werden, wobei jeder dieser Teilbreiten jeweils zumindest eine Mischkammer zugeordnet sein kann. Innerhalb der jeweiligen Mischkammer können verschiedene Trägerflüssigkeiten und/oder Wirkstoffkonzentrate variabel zusammengeführt und/oder vermischt werden, welche Trägerflüssigkeiten und/oder Wirkstoffkonzentrate in separaten Tanks bevorratet und/oder mitgeführt werden können. Der Transport der Trägerflüssigkeiten und/oder Wirkstoffkonzentrate von den Tanks in die jeweiligen Mischkammern kann jeweils über eine separate Pumpe oder über eine gemeinsame Pumpe erfolgen. Auf diese Weise können die jeweiligen Teilbreiten mit jeweils unterschiedlichen Wirkstoffkonzentrationen und/oder -mischungen beaufschlag werden, was bspw. für eine teilflächenspezifische Wirkstoffanwendung oder auch für das Befahren von Randbeständen sinnvoll bzw. notwendig sein kann. Hierbei kann während der Überfahrt z.B. an den linksseitigen Teilbreiten eine Wirkstoffkonzentration reduziert werden, während die übrigen Bereiche noch mit der zuvor eingestellten Wirkstoffkonzentration beaufschlagt werden, wobei diese Einstellungen bei der weiteren Überfahrt verändert werden können.

Jeder Mischkammer kann eine Ringleitung zugeordnet sein, welche Ringleitung jeweils über ein Regelventil oder über eine Vielzahl an Regelventilen mit der Ausgangsleitung verbunden ist. Auf diese Weise kann pro Teilbreite ein separater Kreislauf zwischen der zumindest einen Mischkammer und dem jeweiligen Regelventil ausgebildet werden. Wahlweise können die Mischkammern der einzelnen Teilbreiten jeweils über eine gemeinsame Ringleitung miteinander verbunden sein, welche Ringleitung jeweils über ein Regelventil oder über eine Vielzahl an Regelventilen mit der Ausgangsleitung verbunden ist. Über das Regelventil bzw. über die Regelventile kann eine dosierte Zuführung der in der Ringleitung beförderten Trägerflüssigkeit und/oder der Wirkstoffmittel zur Ausgangsleitung und/oder zu den Ausbringdüsen erfolgen.

Um die Ausbringmenge bzw. das Mischungsverhältnis entlang der Arbeitsbreite des Verteilergestänges noch weiter zu variieren, ist zwischen der Ringleitung und dem Regelventil und/oder zwischen dem Regelventil und der Ausgangsleitung, zumindest eine Messeinrichtung wie bspw. Durchflussmesser, Druckaufnehmer oder dergl. angeordnet. Weisen bspw. alle Druckaufnehmer die weitgehend gleichen Drücke auf, kann daraus geschlossen werden, dass an allen Bereichen der Verteilvorrichtung die weitgehend gleiche Menge an Trägerflüssigkeit und/oder Wirkstoffmittel ausgebracht wird. Soll dies, insbesondere die Ausbringmenge an Trägerflüssigkeit und/oder Wirkstoffmittel, variiert werden, können die Regelventile derartig gesteuert werden, dass sich verschiedene Messwerte wie bspw. Drücke bzw. Durchflussmengen oder dergl. ergeben und/oder einstellen. Durch eine derartige Ausgestaltung kann ebenfalls an jeder Verbindungsstelle ein exaktes Mischungsverhältnis der wenigstens zwei Wirkstoffmittel erzeugt werden, wodurch die Verteilqualität wesentlich verbessert werden kann.

Um die Anzahl an eingesetzten Messeinrichtungen möglichst gering zu halten kann in einer weiteren Ausgestaltungsvariante vorgesehen sein, dass entlang der Ausgangsleitung nur jeweils eine Messeinrichtung angeordnet ist. Dies ist dann möglich, wenn bspw. die entsprechenden Drücke entlang der Ausgangsleitung, weitgehend konstant sind, bzw. deren Unterschiede zu keiner Beeinträchtigung der Verteilqualität führen. Ebenso kann bspw. die Anzahl an Messeinrichtungen zwischen der Ringleitung und den Regelventilen entsprechend reduziert werden, so dass bspw. nur noch vereinzelten Regelventilen, beispielsweise jedem zweiten, dritten oder vierten Regelventil oder dergleichen, zumindest eine Messeinrichtung zugeordnet ist. Es gilt jedoch hierbei, dass je höher die Anzahl an Messeinrichtungen ist, desto höher ist die Verteilgenauigkeit.

Um eine teilflächenspezifische Ausbringung zu erreichen, kann die dosierte Zuführung von Wirkstoffmittel aus der Ringleitung in die Ausgangsleitung auf Basis von Positionsdaten bzw. Ortsangaben erfolgen, welche bspw. mittels eines GPS-Signals in einer Rechnereinheit hinterlegt sein bzw. von der Rechnereinheit abgerufen werden. Auch wäre es denkbar, dass eine dosierte Zuführung auf Basis von Daten zum Pflanzenbestand erfolgt, wobei diese Daten bspw. die Bestandsdichte oder den Schädlingsbefall oder dergl. umfassen kann. Die Daten zum Pflanzenbestand können vorab in der Rechnereinheit hinterlegt sein. Entsprechend der Positionsdaten und der Daten zum Pflanzenbestand können bspw. auch die Wirkstoffkonzentrate, welche dosiert der zumindest einen Mischkammer zugeführt werden, variiert werden bzw. deren Menge variiert werden.

Die Erfindung betrifft zudem ein Verfahren zur Verteilung von Flüssigkeiten, insbesondere von flüssigen Trägerflüssigkeiten und/oder von in Trägerflüssigkeiten gelösten Wirkstoffkonzentraten wie Düngemittel, Pflanzenschutzmittel oder dergl., wobei das Verfahren insbesondere in einer landwirtschaftlichen Feldspritze Verwendung findet. Mittels des Verfahrens werden wenigstens zwei verschiedene Trägerflüssigkeiten und/oder Wirkstoffmittel ausgebracht, wobei diese mittels einer von einer Kraftquelle angetriebenen Pumpe entlang einer Ringleitung und entlang einer Ausgangsleitung in Richtung eines Verteilergestänges befördert werden. Am Verteilergestänge sind zur Verteilung der Wirkstoffmittel bzw. der Trägerflüssigkeit Ausbringdüsen angebracht, wobei diese hierfür einen nach unten gerichteten Sprühkegel erzeugen, und wobei diese zumindest mit der Ausgangsleitung verbunden sind. Darüber hinaus ist zumindest eine Mischkammer vorgesehen, welche mit der Ringleitung verbunden ist bzw. mit dieser einen Kreislauf bildet, wobei mittels der Mischkammer zumindest ein weiteres Wirkstoffmittel bereitgestellt bzw. bevorratet wird. Mit der zumindest einen Mischkammer ist zumindest eine als einstellbare Dosiereinrichtung ausgebildete Zufuhreinrichtung, die dazu ausgelegt ist, dass der zumindest einen Mischkammer verschiedene Trägerflüssigkeiten und/oder Wirkstoffkonzentrate in einstellbarer Weiser zugeführt werden können, verbunden. In der zumindest einen Mischkammer entsteht somit ein weiteres Wirkstoffmittel, wobei deren Zusammensetzung bzw. deren Konzentration in Abhängigkeit von der Anzahl an Zufuhreinrichtungen bzw. der Anzahl an verschiedenen Wirkstoffkonzentraten sowie deren Menge und der Menge an zugeführter Trägerflüssigkeit variabel ist und jeweils in Abhängigkeit der gewünschten Verteilung angepasst werden kann.

Um eine für eine teilflächenspezifische Bearbeitung erforderliche kurze Reaktionszeit bei einer nicht erhöhten Anzahl an Ausbringdüsen zu erreichen, sieht das erfindungsgemäße Verfahren zumindest eine Verbindung zwischen der Ausgangsleitung und der Ringleitung im Bereich des Verteilergestänges vor, wobei der Verbindung ein Regelventil zur dosierten Zuführung der in der Ringleitung beförderten Trägerflüssigkeit und/oder der Wirkstoffmittel zur Ausgangsleitung und/oder zu den Ausbringdüsen zugeordnet ist. Dabei lässt sich die Reaktionszeit noch weiter verringern, wenn die Anzahl an Verbindungen bzw. an Regelventilen entlang der Verteilvorrichtung erhöht wird. So wäre es denkbar, dass die Verteilvorrichtung eine Mehrzahl von Segmenten oder Teilbreiten aufweist und dass bspw. jeder Teilbreite der Verteilvorrichtung eine Verbindung mit einem Regelventil zugeordnet ist, oder dass jeder Ausbringdüse eine Verbindung bzw. ein entsprechendes Regelventil zugeordnet ist. Ebenso wäre es denkbar, dass die Verbindung bzw. das Regelventil in die Ausbringdüse integriert ist. Somit kann anhand der Anzahl an Verbindungen bzw. an Regelventilen jeweils die Zeitdifferenz definiert werden, bis alle Ausbringdüsen mit dem entsprechenden Wirkstoffmittel versorgt sind, und wie lange diese bei einem Ausschalten noch nachlaufen. Ebenso ist die Reaktionszeit desto kürzer, desto näher die Verbindung bzw. das Regelventil zu den Ausbringdüsen angeordnet ist. Aus diesem Grund erfolgt die Verbindung vorzugsweise ausschließlich im Bereich des Verteilergestänges bzw. unmittelbar an den Ausbringdüsen oder ist in die Ausbringdüsen integriert.

Das Verteilergestänge kann beispielsweise in zwei, vier oder sechs Teilbreiten oder in beliebig viele Teilbreiten unterteilt werden, wobei jeder Teilbreite zumindest eine Mischkammer zugeordnet sein kann. Innerhalb der jeweiligen Mischkammer können verschiedene Trägerflüssigkeiten und/oder Wirkstoffkonzentrate variabel zusammengeführt und/oder vermischt werden, welche Trägerflüssigkeiten und/oder Wirkstoffkonzentrate in separaten Tanks bevorratet und/oder mitgeführt werden. Der Transport der Trägerflüssigkeiten und/oder Wirkstoffkonzentrate von den Tanks in die jeweiligen Mischkammern kann jeweils über eine separate Pumpe oder über eine gemeinsame Pumpe erfolgen.

Jeder Mischkammer kann eine Ringleitung zugeordnet sein, welche Ringleitung jeweils über ein Regelventil oder über eine Vielzahl an Regelventilen mit der Ausgangsleitung verbunden ist. Auf diese Weise kann pro Teilbreite ein separater Kreislauf zwischen der zumindest einen Mischkammer und dem Regelventil ausgebildet werden. Wahlweise können die Mischkammern der einzelnen Teilbreiten jeweils über eine gemeinsame Ringleitung miteinander verbunden sein, welche Ringleitung jeweils über ein Regelventil oder über eine Vielzahl an Regelventilen mit der Ausgangsleitung verbunden ist. Über das Regelventil bzw. die Regelventile kann eine dosierte Zuführung der in der Ringleitung beförderten Trägerflüssigkeit und/oder der Wirkstoffmittel zur Ausgangsleitung und/oder zu den Ausbringdüsen erfolgen.

Um die Ausbringmenge bzw. das Mischungsverhältnis entlang der Arbeitsbreite der Verteilvorrichtung noch weiter variieren zu können, ist zwischen der Ringleitung und dem Regelventil und/oder zwischen dem Regelventil und der Ausgangsleitung, zumindest eine Messeinrichtungen-wie bspw.

Durchflussmesser, Druckaufnehmer oder dergl. zugeordnet. Weisen bspw. alle Druckaufnehmer die weitgehend gleichen Drücke auf, kann daraus geschlossen werden, dass an allen Bereichen der Verteilvorrichtung die weitgehend gleiche Menge an Trägerflüssigkeit und/oder Wirkstoffmittel ausgebracht wird. Soll dies variiert werden, können die Regelventile derartig gesteuert werden, dass sich verschiedene Messwerte wie bspw. Drücke bzw. Durchflussmengen oder dergl. ergeben. Durch eine derartige Ausgestaltung kann ebenfalls an jeder Verbindungsstelle ein exaktes Mischungsverhältnis der wenigstens zwei Wirkstoffmittel erzeugt werden.

Um eine teilflächenspezifische Ausbringung zu erreichen, kann die dosierte Zuführung von Wirkstoffmittel aus der Ringleitung in die Ausgangsleitung auf Basis von Positionsdaten bzw. Ortsangaben erfolgen, welche bspw. mittels eines GPS-Signals in einer Rechnereinheit hinterlegt sind bzw. von der Rechnereinheit abgerufen werden. Auch wäre es denkbar, dass eine dosierte Zuführung auf Basis von Daten zum Pflanzenbestand erfolgt, wobei diese Daten bspw. die Bestandsdichte oder den Schädlingsbefall oder dergl. umfassen kann. Die Daten zum Pflanzenbestand können in der Rechnereinheit hinterlegt sein. Entsprechend der Positionsdaten und der Daten zum Pflanzenbestand können bspw. auch die Wirkstoffkonzentrate, welche dosiert der zumindest einen Mischkammer zugeführt werden, variiert werden bzw. deren Menge variiert werden.

Ergänzend wird noch darauf hingewiesen, dass als Trägerflüssigkeit neben Klarwasser auch normale bisher übliche Spritzbrühe, in welcher Standardwirkstoffe und/oder Düngemittel enthalten sind, Verwendung finden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Seitenansicht einer als selbstfahrende Maschine ausgeführte landwirtschaftliche Feldspritze.
Fig. 2 zeigt ein Flüssigkeitsschema einer landwirtschaftlichen Feldspritze mit einer Mehrzahl von Verbindungen zwischen einer Ausgangsleitung und einer Ringleitung sowie dazwischen angebrachter Regelventile.
Fig. 3 zeigt ein Flüssigkeitsschema einer landwirtschaftlichen Feldspritze mit mehreren Verteilsektionen sowie einer Verbindung zwischen einer Ausgangsleistung und einer Ringleitung jeder Sektion.
Fig. 4A zeigt eine Verbindung zwischen einer mit einer Ausbringdüse verbundenen Ausgangsleitung mit einer Ringleitung mit dazwischen angebrachtem Regelventil.
Fig. 4B zeigt eine Verbindung zwischen einer mit einer Ausbringdüse verbundenen Ausgangsleitung mit einer Ringleitung mit dazwischen angebrachtem Regelventil sowie jeweils dazwischen angebrachtem Druckaufnehmer.
Fig. 4C zeigt eine Verbindung zwischen einer mit einer Ausbringdüse verbundenen Ausgangsleitung mit einer Ringleitung mit dazwischen angebrachtem Regelventil sowie jeweils dazwischen angebrachtem Durchflussmesser.

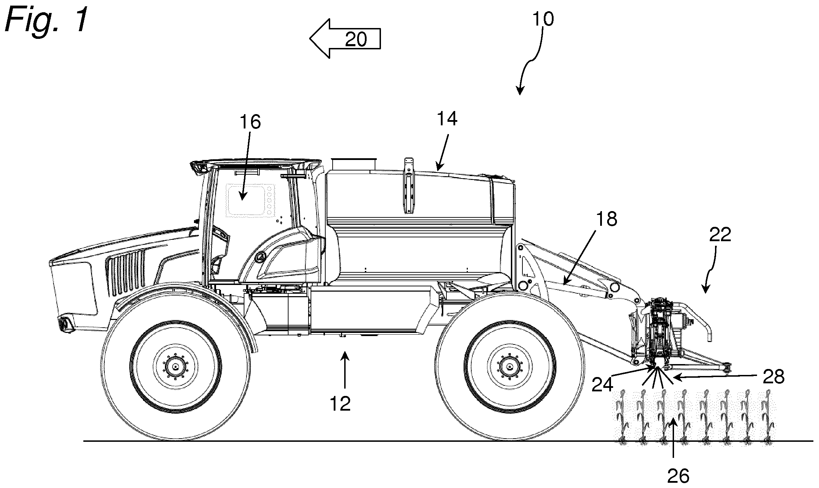

Für gleiche oder gleich wirkende Elemente der Erfindung werden in den Figuren 1 bis 4 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Feldspritze oder das erfindungsgemäße Verfahren ausgestaltet sein können und stellen keine abschließende Begrenzung dar.

Die Seitenansicht der Fig. 1 zeigt eine als selbstfahrende Maschine ausgebildete landwirtschaftliche Feldspritze 10 zum Ausbringen von Flüssigkeiten, insbesondere von flüssigen Trägerflüssigkeiten und/oder von in Trägerflüssigkeiten gelösten Wirkstoffkonzentraten, wie Düngemittel, Pflanzenschutzmittel oder dergl. Die Feldspritze 10 umfasst ein Trägerfahrzeug 12 mit eigenem Antrieb, einen Rahmen zum Tragen der einzelnen Baugruppen, zumindest einen Vorratsbehälter 14 zum Mitführen wenigstens einer Trägerflüssigkeit, eine Rechnereinheit 16 zum Steuern der einzelnen Maschinenelemente und ihrer Parameter sowie ein gegenüber dem Trägerfahrzeug 12 mittels heckseitig an diesem angeordneten Stellelementen 18 höhenverstellbares und quer zur Fahrrichtung 20 angeordnetes Verteilergestänge 22 bzw. Spritzgestänge. Am Verteilergestänge 22 sind in Abständen von bspw. fünfundzwanzig oder fünfzig Zentimeter zueinander mehrere Düsenstöcke mit daran angebrachten Ausbringdüsen 24 angeordnet. Mittels der Ausbringdüsen 24 wird die jeweilige Trägerflüssigkeit und/oder das Wirkstoffmittel jeweils über einen Pflanzenbestand 26 ausgebracht, wobei die Ausbringdüsen 24 hierfür einen zum Pflanzenbestand 26 hin gerichteten Sprühkegel 28 erzeugen können.

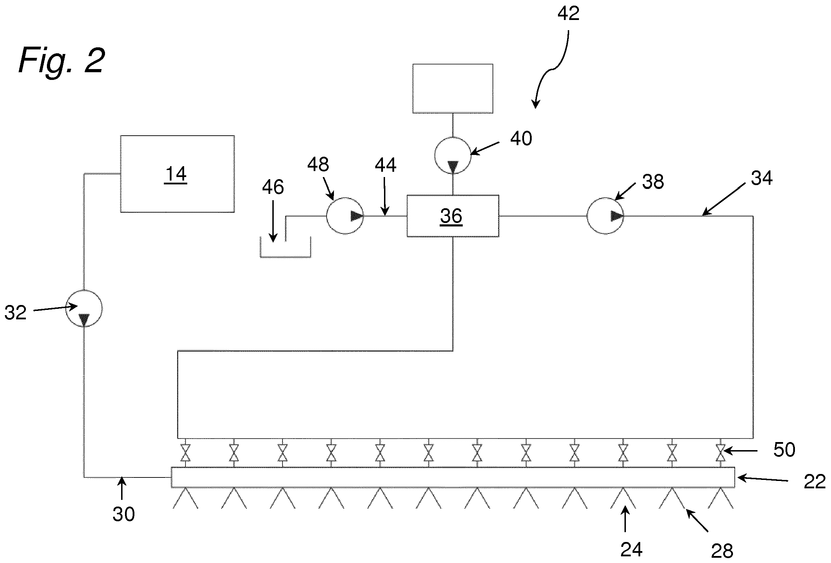

Weitere Details der landwirtschaftlichen Feldspritze 10 gehen aus dem Flüssigkeitsschema der Fig. 2 hervor. An einem Verteilergestänge 22 sind eine Mehrzahl von Ausbringdüsen 24 angebracht, welche einen nach unten gerichteten Sprühkegel 28 erzeugen. Auf der linken Seite des Verteilergestänges 22 mündet eine Ausgangsleitungsleitung 30, welche entlang des Verteilergestänges 22 geführt wird und mit den Ausbringdüsen 24 derartig verbunden wird, dass diese mit einer ersten Trägerflüssigkeit und/oder einem ersten Wirkstoffmittel versorgt werden. Diese Trägerflüssigkeit bzw. dieses Wirkstoffmittel wird von einem Vorratsbehälter 14 bereitgestellt und mittels einer Pumpe 32 entlang der Ausbringleitung 30 gefördert.

Parallel zur Ausgangsleitung 30 wird eine Ringleitung 34 geführt, wobei die Ringleitung 34 zusammen mit einer dieser zugeordneten Mischkammer 36 einen Kreislauf bildet und wobei die durch die zumindest eine Mischkammer 36 weitere bereitgestellte Trägerflüssigkeit und/oder das Wirkstoffmittel entlang dieser Ringleitung 34 mit einer Förderpumpe 38 befördert wird. Die zumindest eine Mischkammer 36 ist des Weiteren mit zumindest einer als einstellbaren Dosiereinrichtung 40 ausgebildeten Zufuhreinrichtung 42 verbunden, die dazu ausgelegt ist, dass der zumindest einen Mischkammer 36 verschiedene Trägerflüssigkeiten und/oder Wirkstoffkonzentrate in einstellbarer Weise zugeführt werden können. Ebenso ist die zumindest eine Mischkammer 36 über einen Leitungsabschnitt 44 mit einem weiteren Tank 46 verbunden, welcher eine Trägerflüssigkeit bereitstellt, welche wiederum über eine Dosierpumpe 48 in einstellbarer Weise der zumindest einen Mischkammer 36 zugeführt wird. In der zumindest einen Mischkammer 36 entsteht somit ein weiteres Wirkstoffmittel. Im Ausführungsbeispiel der Fig. 2 sind der Tank 46 und der Vorratsbehälter 14 als separate Einheiten gebildet. Es wäre jedoch auch denkbar, dass diese durch einen gemeinsamen Vorratstank gebildet werden bzw. dass die Trägerflüssigkeit jeweils durch einen gemeinsamen Vorratstank bereitgestellt wird.

Das in der zumindest einen Mischkammer 36 erzeugte Wirkstoffmittel wird über die Ringleitung 34 dauerhaft entlang des Verteilergestänges 22 bzw. parallel zur Ausgangsleitung 30 befördert. Um die Ringleitung 34 mit der Ausgangsleitung 30 bzw. mit den Ausbringdüsen 24 zu verbinden, sind zwischen diesen eine Mehrzahl entsprechend der Anzahl an Ausbringdüsen 24 von Regelventilen 50 angebracht. Mittels dieser Regelventile 50 wird jeweils eine gewünschte Menge an Wirkstoffmittel aus der zumindest einen Mischkammer 36 bzw. aus der Ringleitung 34 in die Ausgangsleitung 30 bzw. zu den jeweiligen Ausbringdüsen 24 zugeführt, so dass über die Regelventile 50 jeweils beliebige Stellen des Verteilergestänges 22 mit einem entsprechenden Wirkstoffmittel versorgt werden können, wobei durch eine entsprechende Anzahl an Regelventilen 50 schnelle Reaktionszeiten ermöglicht werden sowie durch die Verbindung keine zusätzlichen Ausbringdüsen 24 benötigt werden, wodurch eine gegenseitige Beeinflussung von derartigen unterbunden wird sowie eine gewünschte Konzentration bzw. Menge der jeweiligen Wirkstoffmittel immer erreicht wird. Neben der im Ausführungsbeispiel der Fig. 2 gezeigten Anordnung eines Regelventils 50 bei jeder Ausbringdüse 24 wäre es ebenso denkbar, dass nur vereinzelten Ausbringdüsen 24 wie bspw. jeder zweiten oder jeder dritten jeweils ein Regelventil 50 zugeordnet wird, wobei jedoch mit einer erhöhten Anzahl jeweils die Verteilqualität gesteigert werden kann.

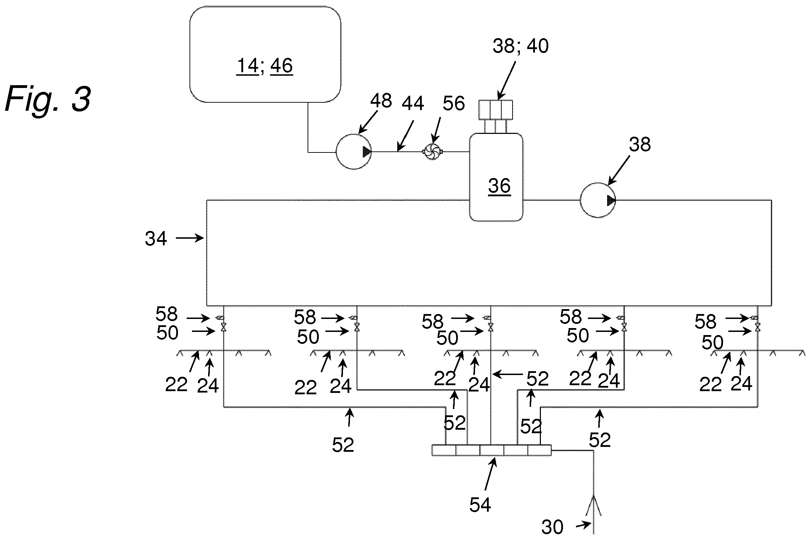

Ein weiteres Flüssigkeitsschema der landwirtschaftlichen Feldspritze 10 geht aus der Fig. 3 hervor. An einem sich aus mehreren Segmenten zusammengesetzten Verteilergestänge 22 sind an jedem Segment vier Ausbringdüsen 24 angebracht. Die Ausbringdüsen 24 werden von einer mit den jeweiligen Segmenten verbundenen Ausgangsleitung 30 versorgt. Die Ausgangsleitung 30 ist entsprechend der Anzahl an Segmenten in fünf Verbindungsleitungen 52 aufgeteilt, welche jeweils zwischen einem Segment und einer Verteilereinheit 54 angeordnet sind, in welche Verteilereinheit 54 wiederum die Ausgangsleistung 30 mündet. Im Ausführungsbeispiel der Fig. 3 sind die Ausbringdüsen 24 in fünf Segmente mit jeweils vier Ausbringdüsen 24 unterteilt. Es wären jedoch auch andere Anzahlen von Segmenten und daran angebrachter Ausbringdüsen 24 vorstellbar. So bspw. nur ein Segment mit einer Ausbringdüse 24 oder bspw. 10 Segmente mit jeweils einer Ausbringdüse usw. wobei diese Segmente auch in sog. Teilbreiten eingeteilt werden können.

In Abhängigkeit der Anzahl an Segmenten und daran angebrachter Ausbringdüsen 24 kann jeweils eine schnellere bzw. kürzere Reaktionszeit der Versorgung der Ausbringdüsen 24 mit der ersten Trägerflüssigkeit und/oder mit den ersten Wirkstoffmitteln erfolgen.

Parallel zu den Segmenten ist eine Ringleitung 34 geführt, wobei die Ringleitung 34 zusammen mit einer dieser zugeordneten Mischkammer 36 einen Kreislauf bildet und wobei die durch die zumindest eine Mischkammer 36 weitere bereitgestellte Trägerflüssigkeit und/oder das Wirkstoffmittel entlang dieser Ringleitung 34 dauerhaft mit einer Förderpumpe 38 befördert wird. Die zumindest eine Mischkammer 36 ist darüber hinaus mit einer als einstellbare Dosiereinrichtung 40 ausgebildeten Zufuhreinrichtung 42 verbunden, die dazu ausgelegt ist, dass der zumindest einen Mischkammer 36 verschiedene Trägerflüssigkeiten und/oder Wirkstoffkonzentrate in einstellbarer Weise zugeführt werden können. Ebenso ist die zumindest eine Mischkammer 36 über einen Leitungsabschnitt 44 mit einem weiteren eine Trägerflüssigkeit mitführenden Tank 46 verbunden, wobei es sich hierbei auch um den Vorratsbehälter 14, welcher bspw. die Ausgangsleitung 30 versorgt, handeln kann. Über den Leitungsabschnitt 44 wird über eine Dosierpumpe 48 und auf Basis der Werte eines Durchflussmessers 56 bzw. eines Mengenmessers in einstellbarerweise eine Trägerflüssigkeit der zumindest einen Mischkammer 36 zugeführt, so dass in der zumindest einen Mischkammer 36 ein weiteres bzw. zweites Wirkstoffmittel entsteht.

Das in der zumindest einen Mischammer 36 somit erzeugte Wirkstoffmittel wird über eine Ringleitung 34 dauerhaft entlang der Segmente des Verteilergestänges 22 befördert. Um die Ringleitung 34 mit der Ausgangsleitung 30 bzw. mit den den Segmenten zugeordneten Ausbringdüsen 24 zu verbinden, sind zwischen der Ringleitung 34 und diesen jeweils Regelventile 50 angebracht. Durch die Regelventile 50 wird jeweils eine definierbare bzw. gewünschte Menge an Wirkstoffmittel aus der Mischkammer 36 in die Ausgangsleitung 30 bzw. in die Verbindungsleitung 52 bzw. den jeweiligen Ausbringdüsen 24 zugeführt, so dass über die Regelventile 50 jeweils beliebige Segmente des Verteilergestänges 22 mit einem entsprechenden Wirkstoffmittel aus der zumindest einen Mischkammer 36 versorgt werden können. Dies erfolgt durch die Mehrzahl an Segmenten in einer gewünschten kurzen Reaktionszeit.

Vor jedem der Regelventile 50 ist eine Messeinrichtung 58 bspw. in Form eines Durchflussmessers oder eines Druckaufnehmers angeordnet. Mittels dieser kann die jeweilige Ausbringmenge entsprechend geregelt werden. Weisen bspw. alle Messeinrichtungen 58 die weitgehend gleichen Drücke auf, kann davon ausgegangen werden, dass an allen Segmenten der Verteilvorrichtung 22 die weitgehend gleiche Menge an Trägerflüssigkeit und/oder Wirkstoffmittel ausgebracht wird. Soll dies variiert werden, können die Regelventile 50 derartig gesteuert werden, dass sich verschiedene Drücke bzw. Durchflussmengen oder dergl. ergeben. Um dies noch weiter zu verbessern, kann bspw. auch den Verbindungsleitungen 52 oder der Verteilereinheit 54 ebenso eine, hier nicht dargestellte, entsprechende Messeinrichtung 58 zugeordnet sein.

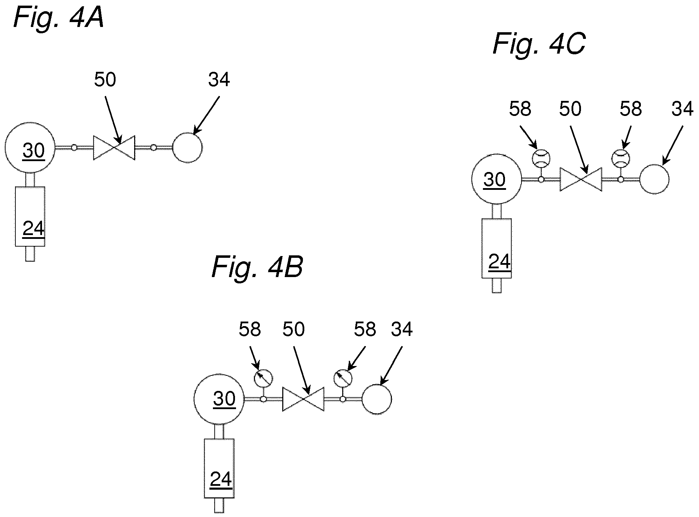

Mögliche Verbindungsvarianten zwischen der Ausgangsleitung 30 und der Ringleitung 34 gehen aus den Figuren 4A, 4B und 4C hervor. Die Fig. 4A zeigt hierbei zunächst in einem Querschnitt eine Ausgangsleitung 30 sowie eine Ringleitung 34 die parallel zueinander angeordnet sind. An die Ausgangsleitung 30 schließt nach unten gerichtet eine Ausbringdüse 24 an. Zwischen der Ausgangsleitung 30 und der Ringleitung 34 ist ein Regelventil 50 angebracht, mittels welchem die von der Ringleitung 34 der Ausgangsleitung 30 zugeführte Menge an Wirkstoffmittel variiert werden kann. Um dies verbessern zu können bzw. um die jeweilige Menge definiert einstellen zu können, können gemäß der Figuren 4B und 4C zwischen der Ringleitung 34 und dem Regelventil 50 und/oder zwischen der Ausgangsleitung 30 und dem Regelventil 50 Messeinrichtungen 58 derartig zugeordnet sein, dass mittels dieser der jeweils anliegende Druck (Vergl. Fig. 4B) bzw. die durchströmende Menge (Vergl. Fig. 4C) an Wirkstoffmittel erfasst wird und das Regelventil 50 anhand dieser Werte geregelt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Feldspritze
12 Trägerfahrzeug
14 Vorratsbehälter
16 Rechnereinheit
18 Stellelement
20 Fahrtrichtung
22 Verteilergestänge
24 Ausbringdüse
26 Pflanzenbestand
28 Sprühkegel
30 Ausgangsleitung
32 Pumpe
34 Ringleitung
36 Mischkammer
38 Förderpumpe
40 Dosiereinrichtung
42 Zufuhreinrichtung
44 Leitungsabschnitt
46 Tank
48 Dosierpumpe
50 Regelventil
52 Verbindungsleitung
54 Verteilereinheit
56 Durchflussmesser
58 Messeinrichtung

## Patentansprüche

1. Landwirtschaftliche Feldspritze (10) zum Ausbringen von Flüssigkeiten, insbesondere von flüssigen Trägerflüssigkeiten und/oder von in Trägerflüssigkeiten gelösten Wirkstoffkonzentraten wie Düngemittel, Pflanzenschutzmittel oder dergl.,
- mit wenigstens einem Verteilergestänge (22) mit daran angeordneten und/oder diesem zugeordneten Ausbringdüsen (24) zum Versprühen und/oder Feinverteilen der auszubringenden Flüssigkeit, wobei die Ausbringdüsen (24) fluidisch mit wenigstens einer Ausgangsleitung (30) verbunden und/oder von dieser gespeist sind;
- und mit wenigstens einer Ringleitung (34), die zumindest abschnittsweise entlang des Verteilergestänges (22) geführt ist,
wobei der Ausgangsleitung (30) und/oder der Ringleitung (34) mindestens eine von einer Kraftquelle angetriebene Pumpe (32; 38) zur Beförderung von verschiedenen Trägerflüssigkeiten und/oder von Wirkstoffmittel zugeordnet ist;
- und mit zumindest einer mit der Ringleitung (34) in Verbindung stehenden und gemeinsam mit dieser einen Kreislauf bildenden Mischkammer (36) zum Bevorraten und/oder Vermischen von der Ringleitung (34) zuzuführenden oder zugeführten Trägerflüssigkeiten und/oder Wirkstoffkonzentraten,
wobei der Mischkammer (36) mindestens eine als einstellbare Dosiereinrichtung (40) ausgebildete Zufuhreinrichtung (42) zur einstellbaren Zufuhr von Wirkstoffkonzentrat zur Mischkammer (36) zugeordnet ist,
wobei zwischen der Ausgangsleitung (30) und der Ringleitung (34) mindestens ein Regelventil (50) zur dosierten Zuführung der in der Ringleitung (34) beförderten Trägerflüssigkeit und des dort beförderten Wirkstoffmittels oder -konzentrats zur Ausgangsleitung (30) und/oder zu den Ausbringdüsen (24) angeordnet ist, und wobei die Feldspritze dazu eingerichtet ist,
das in der zumindest einen Mischkammer (36) erzeugte Wirkstoffmittel über die Ringleitung (34) dauerhaft entlang des Verteilergestänges (22) bzw. parallel zur Ausgangsleitung (30) zu befördern,
**dadurch gekennzeichnet, dass** zwischen der Ausgangsleitung (30) und dem mindestens einen Regelventil (50) und/oder zwischen der Ringleitung (34) und dem mindestens einen Regelventil (50) jeweils eine Messeinrichtung (58) angeordnet ist.

2. Landwirtschaftliche Feldspritze nach Anspruch 1, **dadurch gekennzeichnet, dass** das mindestens eine Regelventil (50) auf Basis von durch die Messeinrichtung (58) ermittelten Werten ansteuerbar ist.

3. Landwirtschaftliche Feldspritze nach einem der vorhergehenden Ansprüche, **dadurch gekennzeichnet, dass** das Verteilergestänge (22) und die daran angeordneten Ausbringdüsen (24) in mehrere Segmente unterteilt sind, wobei jedem dieser Segmente wenigstens eine Verbindung bzw. ein Regelventil (50) zugeordnet ist.

4. Landwirtschaftliche Feldspritze nach einem der vorhergehenden Ansprüche, **dadurch gekennzeichnet, dass** eine Verbindung zwischen der Ausgangleitung (30) und der Ringleitung (34) im Bereich des Verteilergestänges (22) angeordnet ist.

5. Landwirtschaftliche Feldspritze nach Anspruch 4, **dadurch gekennzeichnet, dass** die Verbindung zwischen der Ausgangsleitung (30) und der Ringleitung (34) einer Ausbringdüse (24) zugeordnet ist und/oder dass das Regelventil (50) in die Ausbringdüse (24) integriert ist.

6. Landwirtschaftliche Feldspritze nach einem der vorhergehenden Ansprüche, **dadurch gekennzeichnet, dass** die landwirtschaftliche Feldspritze dazu eingerichtet ist, dass eine dosierte Zuführung von Wirkstoffmittel in Abhängigkeit von in einer Rechnereinheit (16) hinterlegten oder von dieser abgerufenen Positionsdaten und/oder auf Basis von Ortsangaben erfolgt und/oder dass diese auf Basis von Daten zum Pflanzenbestand erfolgt.

7. Landwirtschaftliche Feldspritze nach einem der vorhergehenden Ansprüche, bei der das Verteilergestänge (22) in mehrere, insbesondere in zwei, vier oder sechs Teilbreiten unterteilt ist, wobei jeder der Teilbreiten mindestens eine separate Mischkammer (36) zugeordnet ist.

8. Landwirtschaftliche Feldspritze nach Anspruch 7, bei der innerhalb der jeweiligen Mischkammer (36) der unterschiedlichen Teilbreiten jeweils gleiche oder verschiedene Trägerflüssigkeiten und/oder Wirkstoffkonzentrate variabel zusammenführbar und/oder vermischbar sind, welche Trägerflüssigkeiten und/oder Wirkstoffkonzentrate in separaten Tanks bevorratet und/oder mitgeführt sind.

9. Landwirtschaftliche Feldspritze nach Anspruch 8, bei der ein Transport der Trägerflüssigkeiten und/oder Wirkstoffkonzentrate von den Tanks in die jeweiligen Mischkammern (36) jeweils über eine separate Pumpe oder über eine gemeinsame Pumpe erfolgt.

10. Verfahren zur Verteilung von Flüssigkeiten, insbesondere von flüssigen Trägerflüssigkeiten und/oder von in Trägerflüssigkeiten gelösten Wirkstoffkonzentraten wie Düngemittel, Pflanzenschutzmittel oder dergl. mittels einer
landwirtschaftlichen Feldspritze (10), wobei
- wenigstens zwei verschiedene Trägerflüssigkeiten und/oder Wirkstoffmittel mittels mindestens einer von einer Kraftquelle angetriebenen Pumpe (32) entlang einer Ausgangsleitung (30) und einer Ringleitung (34) befördert werden,
- einem Verteilergestänge (22) Ausbringdüsen (24) zugeordnet sind, die zumindest mit der Ausgangsleitung (30) verbunden sind, und wobei die Ringleitung (34) entlang des Verteilergestänges (22) geführt wird,
- zumindest eine Mischkammer (36), welche mit der Ringleitung (34) in Verbindung steht und einen Kreislauf bildet, zum Bevorraten und Vermischen der dieser zugeführten Trägerflüssigkeiten und/oder Wirkstoffkonzentrate, wobei dieser wiederum zumindest eine als einstellbare Dosiereinrichtung (40) ausgebildete Zufuhreinrichtung (42), die dazu ausgelegt ist, dass der zumindest einen Mischkammer (36) wenigstens ein Wirkstoffkonzentrat in einstellbarer Weise zuführbar ist, zugeordnet ist,
wobei zwischen der Ausgangsleitung (30) und der Ringleitung (34) zumindest ein Regelventil (50) zur dosierten Zuführung der in der Ringleitung (34) beförderten Trägerflüssigkeit und des Wirkstoffmittels zur Ausgangsleitung (30) und/oder zu den Ausbringdüsen (24) angeordnet ist, und wobei das in der zumindest einen Mischkammer (36) erzeugte Wirkstoffmittel über die Ringleitung (34) dauerhaft entlang des Verteilergestänges (22) bzw. parallel zur Ausgangsleitung (30) befördert wird,
**dadurch gekennzeichnet, dass** zwischen der Ausgangsleitung (30) und dem Regelventil (50) und/oder zwischen der Ringleitung (34) und dem Regelventil (50) jeweils eine Messeinrichtung (58) angeordnet ist.

11. Verfahren nach Anspruch 10, **dadurch gekennzeichnet, dass** das Regelventil (50) auf Basis der durch die Messeinrichtung (58) ermittelten Werte angesteuert wird.

12. Verfahren nach Anspruch 10 oder 11, **dadurch gekennzeichnet, dass** eine dosierte Zuführung von Wirkstoffmittel in Abhängigkeit von in einer Rechnereinheit (16) hinterlegten oder von dieser abgerufenen Positionsdaten und/oder auf Basis von Ortsangaben erfolgt und/oder dass diese auf Basis von Daten zum Pflanzenbestand erfolgt.

## Claims

1. An agricultural field sprayer (10) used for the spreading of liquids, in particular, of liquid carrier liquids and/or of active agent concentrates, such as fertilisers, plant protection agents, or the like, which are dissolved in carrier liquids,
- with at least one distributor boom (22) with spreading nozzles (24) disposed thereon and/or assigned thereto, said spreading nozzles (24) being used for the spraying and/or fine distribution of the liquid to be spread, wherein the spreading nozzles (24) are fluidically connected to and/or supplied by at least one outlet line (30);
- and with at least one loop line (34), which is at least in some sections guided along the distributor boom (22),
wherein at least one power-source-driven pump (32; 38) for the conveyance of various carrier liquids and/or of active agents is assigned to the outlet line (30) and/or to the loop line (34);
- and with at least one mixing chamber (36) in communication with the loop line (34) and forming a circulation system together with the loop line (34), said mixing chamber being used for the storing and/or mixing of carrier liquids and/or active agent concentrates to be supplied from or being supplied from the loop line (34),
wherein the mixing chamber (36) has at least one supply device (42) configured as an adjustable metering device (40) assigned to it, said supply device (42) being used for the adjustable supply of active agent concentrate to the mixing chamber (36), wherein at least one control valve (50) is disposed between the outlet line (30) and the loop line (34), said control valve (50) being used for the metered supply to the outlet line (30) and/or to the spreading nozzles (24) of the carrier liquid being conveyed in the loop line (34) and of the active agent or active agent concentrate being conveyed in the loop line (34), and wherein the field sprayer is configured to convey the active agent produced in the at least one mixing chamber (36) on a permanent basis via the loop line (34) along the distributor boom (22) or, as applicable, parallel to the outlet line (30),
**characterised in that** a measuring device (58) is disposed in each case between the outlet line (30) and the at least one control valve (50) and/or between the loop line (34) and the at least one control valve (50).

2. The agricultural field sprayer according to claim 1, **characterised in that** the at least one control valve (50) is controllable based on values determined by the measuring device (58).

3. The agricultural field sprayer according to one of the previous claims, **characterised in that** the distributor boom (22) and the spreading nozzles (24) disposed thereon are subdivided into a plurality of segments, wherein each of these segments has at least one connection or, as applicable, at least one control valve (50) assigned to it.

4. The agricultural field sprayer according to one of the previous claims, **characterised in that** a connection between the outlet line (30) and the loop line (34) is disposed in the area of the distributor boom (22).

5. The agricultural field sprayer according to claim 4, **characterised in that** the connection between the outlet line (30) and the loop line (34) is assigned to a spreading nozzle (24) and/or **characterised in that** the control valve (50) is integrated into the spreading nozzle (24).

6. The agricultural field sprayer according to one of the previous claims, **characterised in that** the agricultural field sprayer is configured such that a metered supply of active agent is carried out depending on position data stored in or retrieved from a computer unit (16) and/or based on location information, and/or such that said supply is carried out based on data about the crop of plants.

7. The agricultural field sprayer according to one of the previous claims, in which the distributor boom (22) is subdivided into a plurality of partial widths, in particular, into two, four, or six partial widths, wherein each of these partial widths has at least one separate mixing chamber (36) assigned to it.

8. The agricultural field sprayer according to claim 7, in which the same or different carrier liquids and/or active agent concentrates are in each case variably mergeable and/or mixable within each particular mixing chamber (36) of the various partial widths, which carrier liquids and/or active agent concentrates are being stored and/or carried along in separate tanks.

9. The agricultural field sprayer according to claim 8, in which a transport of carrier liquids and/or active agent concentrates from the tanks into the particular mixing chambers (36) is in each case carried out by way of a separate pump or by way of a common pump.

10. A method used for the distribution of liquids by means of an agricultural field sprayer (10), the liquids being, in particular, liquid carrier liquids and/or active agent concentrates, such as fertilisers, plant protection agents, or the like, which are dissolved in carrier liquids, wherein
- at least two different carrier liquids and/or active agents are conveyed by means of at least one power-source-driven pump (32) along an outlet line (30) and a loop line (34),
- spreading nozzles (24) are assigned to a distributor boom (22), said spreading nozzles (24) being connected at least to the outlet line (30), and wherein the loop line (34) is guided along the distributor boom (22),
- at least one mixing chamber (36) is in communication with the loop line (34) and forms a circulation system, the mixing chamber being used for the storing and mixing of carrier liquids and/or active agent concentrates being supplied to said mixing chamber (36), wherein said mixing chamber (36) in turn has at least one supply device (42) configured as an adjustable metering device (40) assigned to it, which supply device (42) is configured such that at least one active agent concentrate is suppliable to the mixing chamber (36) in an adjustable manner,
wherein at least one control valve (50) is disposed between the outlet line (30) and the loop line (34), said control valve (50) being used for the metered supply to the outlet line (30) and/or to the spreading nozzles (24) of the carrier liquid and of the active agent that are being conveyed in the loop line (34), and wherein the active agent produced in the at least one mixing chamber (36) is conveyed on a permanent basis via the loop line (34) along the distributor boom (22) or, as applicable, parallel to the outlet line (30),
**characterised in that** a measuring device (58) is disposed in each case between the outlet line (30) and the control valve (50) and/or between the loop line (34) and the control valve (50).

11. The method according to claim 10, **characterised in that** the at least one control valve (50) is controlled based on the values determined by the measuring device (58).

12. The method according to claim 10 or 11, **characterised in that** a metered supply of active agent is carried out depending on position data stored in or retrieved from a computer unit (16) and/or based on location information, and/or such that said supply is carried out based on data about the crop of plants.

## Revendications

1. Pulvérisateur agricole (10) destiné à l'épandage de liquides, notamment de liquides porteurs liquides et/ou de concentrés de principe actif dissous dans des liquides porteurs, tels qu'engrais, produits phytosanitaires ou équivalents,
- doté d'au moins une tringlerie de dispersion (22) munie de buses d'épandage (24) qui y sont agencées et/ou associées, destinées à la pulvérisation et/ou à la dispersion fine du liquide à répandre, lesdites buses d'épandage (24) étant reliées en termes de fluide, à au moins une conduite de sortie (30) et/ou étant alimentées par celle-ci ;
- et doté d'au moins une conduite annulaire (34) qui court au moins partiellement le long de la tringlerie de dispersion (22),
au moins une pompe (32 ; 38) entraînée par une source d'énergie étant associée à ladite conduite de sortie (30) et/ou à ladite conduite annulaire (34) pour convoyer divers liquides porteurs et/ou agents actifs ;
- et doté d'au moins une chambre de mélange (36) se trouvant en liaison avec la conduite annulaire (34) et formant un circuit avec celle-ci pour approvisionner et/ou mélanger des liquides porteurs et/ou concentrés de principe actif alimentant ou alimentés par la conduite annulaire (34), au moins un dispositif d'alimentation (42) réalisé en tant que dispositif de dosage (40) réglable étant associé à ladite chambre de mélange (36) pour l'alimentation réglable de concentré de principe actif à la chambre de mélange (36),
au moins une soupape de réglage (50) étant agencée entre la conduite de sortie (30) et la conduite annulaire (34) pour l'apport de manière contrôlée du liquide porteur convoyé dans la conduite annulaire (34) et du principe actif ou concentré de celui-ci qui y est convoyé, à la conduite de sortie (30) et/ou aux buses d'épandage (24), et le pulvérisateur agricole étant conçu pour convoyer de manière durable le principe actif créé dans ladite au moins une chambre de mélange (36), via la conduite annulaire (34) le long de la tringlerie de dispersion (22) ou parallèlement à la conduite de sortie (30), **caractérisé en ce qu'**un dispositif de mesure (58) est agencé respectivement entre la conduite de sortie (30) et l'au moins une soupape de réglage (50) et/ou entre la conduite annulaire (34) et ladite au moins une soupape de réglage (50).

2. Pulvérisateur agricole selon la revendication 1, **caractérisé en ce que** ladite au moins une soupape de réglage (50) peut être pilotée sur la base de valeurs déterminées par le dispositif de mesure (58).

3. Pulvérisateur agricole selon l'une quelconque des revendications précédentes, **caractérisé en ce que** la tringlerie de dispersion (22) et les buses d'épandage (24) qui y sont agencées sont divisées en plusieurs segments, au moins une liaison ou une soupape de réglage (50) étant associée à chacun de ces segments.

4. Pulvérisateur agricole selon l'une quelconque des revendications précédentes, **caractérisé en ce qu'**une liaison est agencée entre la conduite de sortie (30) et la conduite annulaire (34) dans la zone de la tringlerie de dispersion (22).

5. Pulvérisateur agricole selon la revendication 4, **caractérisé en ce que** la liaison entre la conduite de sortie (30) et la conduite annulaire (34) est associée à une buse d'épandage (24) et/ou que la soupape de réglage (50) est intégrée dans la buse d'épandage (24).

6. Pulvérisateur agricole selon l'une quelconque des revendications précédentes, **caractérisé en ce que** le pulvérisateur agricole est conçu pour qu'une alimentation de manière contrôlée de principe actif s'effectue en fonction de données de position enregistrées dans une unité de calcul (16) ou appelées par celles-ci, et/ou sur la base d'informations géographiques, et/ou que celle-ci s'effectue sur la base de données relatives au peuplement végétal.

7. Pulvérisateur agricole selon l'une quelconque des revendications précédentes, dans lequel la tringlerie de dispersion (22) se subdivise en plusieurs, notamment en deux, quatre ou six largeurs partielles, au moins une chambre de mélange (36) séparée étant associée à chacune desdites largeurs partielles.

8. Pulvérisateur agricole selon la revendication 7, dans lequel des liquides porteurs et/ou concentrés de principe actif égaux ou différents peuvent respectivement être réunis et/ou mélangés à l'intérieur de la chambre de mélange (36) respective des différentes largeurs partielles, lesquels liquides porteurs et/ou concentrés de principe actif étant stockés et/ou charriés dans des réservoirs séparés.

9. Pulvérisateur agricole selon la revendication 8, dans lequel un transport des liquides porteurs et/ou concentrés de principe actif allant des réservoirs aux chambres de mélange (36) respectives s'effectue respectivement via une pompe séparée ou via une pompe commune.

10. Procédé de répartition de liquides, notamment de liquides porteurs liquides et/ou de concentrés de principe actif dissous dans des liquides porteurs, tels qu'engrais, produits phytosanitaires ou équivalent, au moyen d'un pulvérisateur agricole (10),
- au moins deux liquides porteurs et/ou principes actifs différents étant convoyés, au moyen d'au moins une pompe (32) entraînée par une source d'énergie, le long d'une conduite de sortie (30) et d'une conduite annulaire (34),
- des buses d'épandage (24), qui sont au moins reliées à la conduite de sortie (30), étant associées à une tringlerie de dispersion (22), et la conduite annulaire (34) courant le long de la tringlerie de dispersion (22),
- au moins une chambre de mélange (36), qui est en liaison avec la conduite annulaire (34) et qui forme un circuit destiné à approvisionner et mélanger les liquides porteurs et/ou concentrés de principe actif qui y sont amenés, au moins un dispositif d'alimentation (42), réalisé en tant que dispositif de dosage (40) réglable qui est conçu pour que ledit au moins un concentré de principe actif puisse être amené de manière réglable à ladite au moins une chambre de mélange (36), étant quant à lui associé à ladite chambre de mélange,
au moins une soupape de réglage (50) étant agencée entre la conduite de sortie (30) et la conduite annulaire (34) pour l'apport de manière contrôlée du liquide porteur convoyé dans la conduite annulaire (34) et du principe actif vers la conduite de sortie (30) et/ou les buses d'épandage (24), et le principe actif créé dans ladite au moins une chambre de mélange (36) étant convoyé via la conduite annulaire (34) de manière durable le long de la tringlerie de dispersion (22) ou parallèlement à la conduite de sortie (30),
**caractérisé en ce qu'**un dispositif de mesure (58) est respectivement agencé entre la conduite de sortie (30) et la soupape de réglage (50) et/ou entre la conduite annulaire (34) et la soupape de réglage (50).

11. Procédé selon la revendication 10, **caractérisé en ce que** la soupape de réglage (50) est pilotée sur la base des valeurs déterminées par le dispositif de mesure (58).

12. Procédé selon la revendication 10 ou 11, **caractérisé en ce qu'**un apport de manière contrôlée, de principe actif s'effectue en fonction de données de position enregistrées dans une unité de calcul (16) ou appelées par celle-ci, et/ou sur la base d'informations géographiques, et/ou que celui-ci s'effectue sur la base de données relatives au peuplement végétal.
